# EUROPEAN PATENT APPLICATION

(11) **EP 0 789 084 A1**
(43) Date of publication of application: **13.08.1997**
(21) Application number: 96120083.9
(22) Date of filing: 13.12.1996
(51) Int. Cl.: C21D 1/09, B23K 15/00

(54) **Surface finishing method for a metal member and metal member gained by that method**

(30) Priority: 06.02.1996 JP 44107/96
(71) Applicant: AISIN AW CO., LTD., Anjo-shi Aichi-ken 444-11 (JP)
(72) Inventor: Maruki, Michio, Anjo-shi, Aichi-ken 444-11 (JP); Taniguchi, Takao, Anjo-shi, Aichi-ken 444-11 (JP); Watanabe, Yoshimi, Anjo-shi, Aichi-ken 444-11 (JP); Ohbayashi, Kouji, Anjo-shi, Aichi-ken 444-11 (JP); Momiyama, Naohisa, Anjo-shi, Aichi-ken 444-11 (JP)
(74) Representative: VOSSIUS & PARTNER

(57) **Abstract**

The present invention establishes a surface finishing method capable of smoothly finishing the surface of a metallic member with high efficiency and provides the surface-finished metallic member capable of exhibiting excellent performance, including easy maintenance of the surface finishing method. According to this surface finishing method, only the surface layer of the area to be treated of any metallic member is melted by being irradiated with a high-density energy beam, and the melted portion is resolidified subsequently. Preferably, a) the melted portion comprises a completely melted portion and an incompletely melted portion; b) the energy beam for irradiation is divided so that a plurality of areas of the surface layer to be treated can be melted simultaneously; and c) the melted portion is resolidified by natural cooling. In this way, the surface roughness of the treated metallic member can be reduced markedly. As a result, the resultant metallic member exhibits an excellent performance, for example, as an abrasion resistant surface.

## Description

The present invention relates to a surface finishing method for a metallic member (a method for reducing surface roughness) and the metallic member obtained by the method.

As conventionally known surface finishing methods for reducing surface roughness of metallic members, a 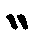 surface polishing method" using sandpaper or abrasive sand to remove unevenness on the material surface, a 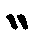 burnishing method*"* using a roller to press uneven surface portions with a roller, and a 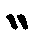 buffing method" using a brush made of metal, etc to round the uneven portions on the material surface have been employed.

However, these surface finishing methods are designed to remove the surface unevenness of the metallic member using mechanical means, which are considered to be more efficient than a chemical polishing method or the like. Nevertheless, there has been an incessant demand for a less time consuming surface finishing method. Furthermore, tools such as sandpaper, roller, brush, and the like used in these methods require a troublesome maintenance work so that they can be used over a long period of time. Such maintenance work includes replacement of the tools at appropriate time intervals in order to maintain precision of the treatment.

Accordingly, for members to be treated on the mass-production basis, it has been considered necessary to develop a surface finishing method which is more efficient and easier to implement in terms of maintenance.

Thus, it is an object of the present invention to establish a surface finishing method capable of smoothing the surface of the metallic members with high efficiency and ensuring easy control of the treating equipment or processes, and thereby to provide a surface-finished metallic member of excellent performance.

The present inventors have found the following fact as a result of their arduous researches for accomplishing the above object.
a) When the surface of an iron-based metallic member such as a steel member or the surface of a nonferrous metallic member such an aluminum or aluminum alloy member is irradiated for a short period of time with a high-density energy beam (ex. electron beam, laser beam, etc.), the irradiated surface layer is locally melted and then resolidifies immediately by self-cooling when the irradiation with the high-density energy beam is discontinued. While the surface layer is melted, the surface roughness is quickly reduced due to the effects of gravity and surface tension, and the surface layer resolidifies maintaining the improved surface condition, so that the surface smoothing can be accomplished within an extremely short period of time without using any special tools.
b) In this case, by adjusting the output and duration of the high-density energy beam so that the melted portion of the surface layer comprises a fully melted layer and a half melted layer adjacent thereto, an inappropriate smoothing result such as a wavy surface which is likely to be formed on the melted and resolidified portion can be prevented with certainty.
c) Furthermore, in irradiating with the high-density energy beam, when the energy beam to be projected is divided, for example, by deflecting it with a deflection lens, so that a plurality of portions can be irradiated substantially at a time, surface treatment for a plurality of portions can be executed in a single operation.
d)The metallic member having a surface layer treated by the above-described fusion and solidification shows an improved surface roughness, which ensures a low friction coefficient and a high abrasion resistance.

The present invention has been made in consideration of the above-described facts. One of the most characteristic parts of the present invention relating to the surface finishing method for metallic member is that 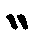 a high-density energy beam is emitted to irradiate a surface of the metallic member to be treated so that only the irradiated surface layer is melted, and the melted portion is resolidified subsequently, thereby enabling the provision of the metallic member having a smoothed surface with an improved surface roughness.

Furthermore, as described previously, it is advantageous to provide the melted portion comprising the fully melted layer and the half melted layer, because a poor surface smoothing result such as a wavy surface which is likely to be formed on the melted and resolidified portions can be prevented.

Moreover, in these cases, if the energy beam to be projected for irradiation is divided so that a plurality of portions on the surface layer to be treated can be melted simultaneously, the plurality of portions can be treated in a single operation, further reducing the cycle time for treatment.

As for resolidification of the melted portion, the natural cooling is preferable for maintaining a required surface finishing precision, but forced cooling such as gas cooling may also be employed.

On the other hand, one of the characteristic parts of the present invention relating to the surface-finished metallic member is 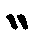 that the surface-finished metallic member has a smoothed portion, only the surface layer of which is melted and resolidified*"*.

In this case, the metallic member to be treated according to the present invention may be of iron-based metal such as steel or the like, aluminium, aluminium alloy, or other nonferrous metals.

The surface treatment method according to the present invention is characterized, as described previously, in that a high-density energy beam is emitted to irradiate a surface of the metallic member to be treated so that only the irradiated surface layer is melted, and the melted portion is resolidified subsequently. In this case, when the surface of the metallic member is irradiated with the high-density beam such as electron beam (EB), laser beam, or the like, the surface layer of the metallic member can be melted locally and shallowly within a short period of time (for example, within 0.05 second, that is, almost instantaneously).

At this time, it is ensured that the melted portion has an extremely smooth surface due to the effects of gravity and surface tension.

Then, when the high-density energy beam is removed from the irradiated portion, the melted layer solidifies immediately while maintaining a smooth surface thereof by natural cooling, that is, without forced cooling. This is because the melted layer is so thin that the heat of the melted layer is quickly transmitted to the base member portion (non-melted portion).

Preferably, the melted portion is resolidified by natural cooling to maintain a required surface precision. However, in the case of a relatively thin metallic member, which is likely to be warped due to the effect of thermal strain, the thickness of the fusion layer may be reduced further using the forced cooling such as gas cooling.

Although natural cooling is employed in most cases of the treatment according to the present invention, there is little local heat accumulation because of the almost instantaneous processes of fusion and resolification. Thus, the precision of the shape of the member to be treated is scarcely affected by the heat. Therefore, according to the method of the present invention, the surface roughness of the member can be reduced partially or entirely without adversely affecting the precision of the shape thereof.

In implementing the surface finishing method according to the present invention, the conditions under which the high-density energy beam is projected for irradiation are adjusted (for example, by reducing the output while slightly increasing the duration) so that the locally melted layer to be formed on the surface layer of the metallic member comprises 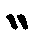 a completely melted layer*"* and 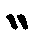 an incompletely melted layer" adjacent thereto and lying thereunder. In this state, if cooling such as self-cooling is conducted, the aforementioned incompletely melted layer serves as a buffer member to absorb any strain generated. Accordingly, an inappropriate smoothing result such as a wavy surface which is likely to appear on the portion to be treated (the portion to be melted and resolidified) can be avoided with certainty.

The condition of the incompletely melted layer can be confirmed by observing the cross section of the member after the treatment thereof has been terminated.

It is known that the high-density energy beam such as the electron beam can be divided to irradiate a plurality of portions.
Thus, in implementing the aforementioned surface finishing method according to the present invention, even a plurality of portions on the surface layer to be treated can be melted simultaneously by dividing the high-density energy beam. In this way, a plurality of portions can be treated in a single operation, thereby further enhancing the efficiency in treatment.

In this case, since the transmitted heat does not cause the temperature of the member to be thermally treated to rise over a wide range thereof, a plurality of surface portions can be smoothed simultaneously exactly within a predetermined area.

In this manner, the surface finishing method according to the present invention can be implemented within a short period of time, which enhances the efficiency in treatment and allows a surface of highly precise smoothness to be obtained.
In addition, since there is no tools such as sandpaper, roller, or the like required, any troublesome problem regarding the maintenance thereof can be eliminated.

The characteristic part of the present invention relating to the surface-finished metallic member lies in 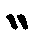 that the metallic member has a smoothed portion, only the surface layer of which is melted and resolidified*"*. Thus, in the case of a surface-treated steel member according to the present invention, the 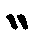 surface layer portion melted and resolidified*"* has a reduced surface roughness and a highly precise smoothness, thereby ensuring a low friction coefficient and an excellent abrasion resistance. Accordingly, it is quite advantageous to employ the thus-treated surface in any of the mechanical parts requiring a high abrasion resistance.
The embodiments of the present invention will be described in the following.

Fig.1 illustrates an example of a surface finishing device for implementing the method of the present invention.

Fig.2 illustrates the shape of a workpiece (a circular-tray-shaped steel member) used in this embodiment.

Fig.3 is a graph comparing surface roughness of the surface-finished portion and that of the non-surface-finished portion.

Fig.4 is a metallographic cross-sectional photograph of the treated portion of a surface-finished metallic member.

Fig.5 is an illustration of another example of a surface finishing device for implementing the method of the present invention.

Fig.6 illustrates an example in which two areas are treated simultaneously.

Fig.7 illustrates a condition under which two areas are irradiated with an electron beam simultaneously.

Fig.8 illustrates an example of the irradiation locus of the electron beam.

Fig.9 shows an example of a deflection waveform of the electron beam emitted for irradiation.

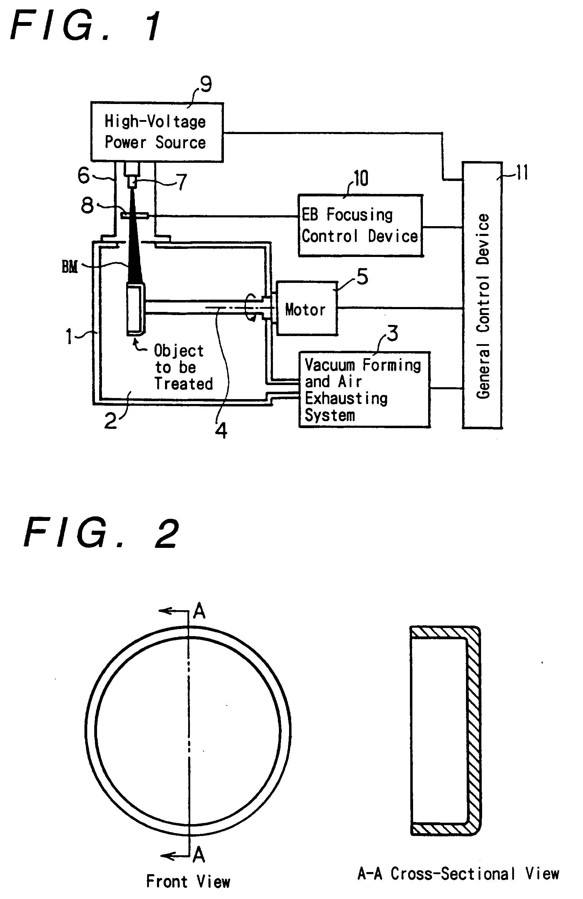

Fig.1 shows an example of a device designed to finish the external surface of a rising portion (flanged portion) of a circular-tray-shaped material according to the method of the present invention.

In this surface finishing device, a vacuum processing chamber case having a sealed construction is denoted by numeral 1, a vacuum processing chamber surrounded by the vacuum processing chamber case 1 by 2, and a vacuum forming and air exhausting system for forming a vacuum state in the vacuum processing chamber 2 by 3. In the vacuum processing chamber 2, a workpiece supporting shaft 4 is installed such that it is able to rotate about the axis thereof. The shaft 4 is driven and caused to rotate by a motor 5 disposed outside the vacuum processing chamber case 1.

The vacuum processing chamber case 1 is connected to a beam tube 6, and an electron beam gun 7 is installed on one end of the beam tube 6.

A focusing lens 8 is installed on the down stream side of the electron beam gun 7 in order to focus an electron beam BM generated by the electron beam gun 7.

The electron beam gun 7 is connected to a high-voltage power source 9. The focusing lens 8 is connected to an EB focusing and deflection control device 10. The vacuum forming and air exhausting system 3, motor 5, high-voltage power source 9 and EB focusing and deflection control device 10 are controlled by a general control device 11.

The surface finishing (surface roughness improving) method was applied to the external surface of the rising portion of a workpiece of low-carbon steel (a press-formed circular-tray-shaped workpiece), using the above-described surface finishing device.

Fig.2 illustrates the shape of the circular-tray-shaped material (workpiece) as an object to be treated. In this surface finishing process, the circular-tray-shaped steel member is supported by the workpiece supporting shaft 4 of the surface finishing device, the center of the circular-tray-shaped member being aligned with the supporting shaft 4, and the circular-tray-shaped member is rotated about its central axis so that the external surface of the rising portion thereof is irradiated by the electron beam EB (output: 4.6KW). In this case, the rotating speed of the surface area (external surface of the rising portion of the workpiece) to be irradiated by the electron beam was adjusted to 16.7m/min.

When the portion to be treated on the circular-tray-shaped steel member is irradiated with the electron beam, the irradiated portion is heated to a fusing temperature equal to or higher than 1,500°C and then melted. However, as the circular-tray-shaped steel member is in rotation, the portion irradiated with the electron beam is shifted continuously towards the adjacent portion along the circumference. Thus, the heat of the melted surface layer is quickly (almost instantaneously) transmitted to the base material portion, causing the melted layer to solidify.

As a result of examining the surface condition of the treated portion thus melted and resolidified, it has been found that the surface roughness was markedly reduced due to the effects of gravity and surface tension. This is because the surface layer was once melted and then resolidified. Furthermore, the treated material was completely free of deformation or surface waviness resulting from thermal strain and the like.

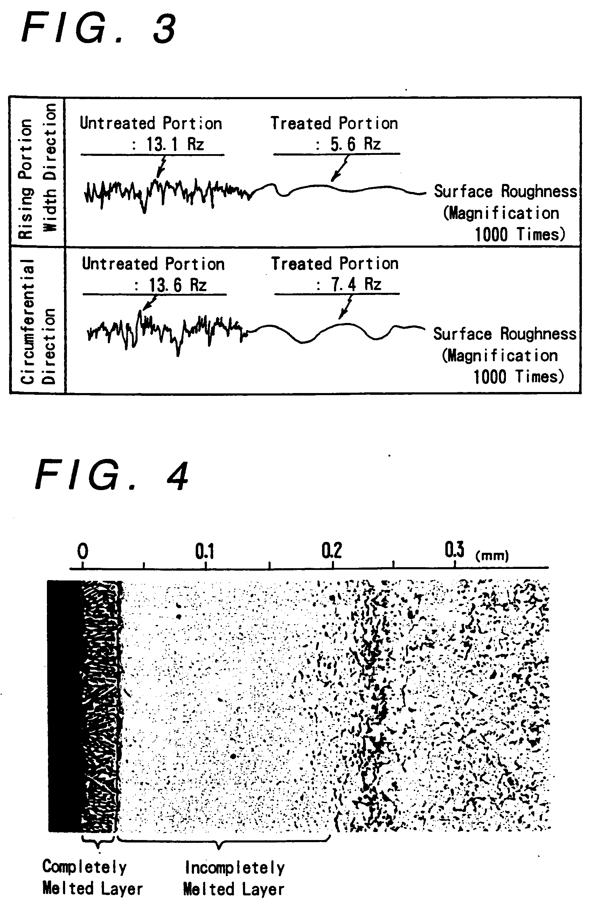

Fig.3 shows a graph comparing the surface roughness (Rz) of the circular-tray-shaped steel member treated by the method according to the present invention and that of an untreated surface of the same. As seen from Fig.3, the portion treated by the method according to the present invention is improved in terms of surface roughness and smoothed remarkably.

Furthermore, such surface smoothed by the treatment shows an extremely low friction coefficient, and it has been confirmed that an excellent effect can be obtained when such smoothed portion is used as an abrasion resistant surface.

Fig.4 shows a cross-sectional microstructure of the member which underwent the surface finishing process. As seen from Fig.4, it can be confirmed that the 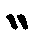 completely melted layer*"* and the 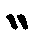 incompletely melted layer*"* comprising a melted portion adjacent to the completely melted portion and an unmelted heated portion exist.

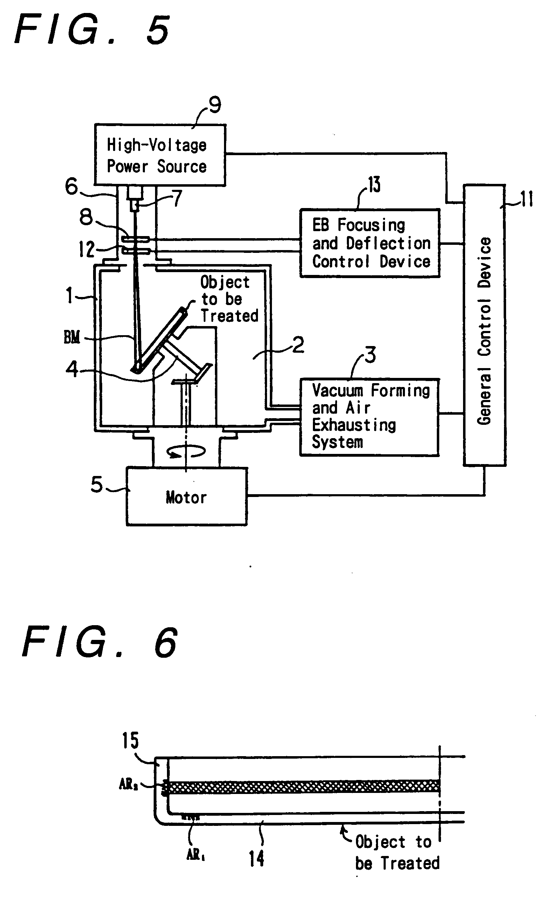

On the other hand, another example of a device designed to implement the surface finishing method according to the present invention is shown in Fig. 5. This device is designed to finish a plurality of surface portions. In Fig. 5, the same reference numerals are allocated to the same components of the surface finishing device as shown in Fig.1.

The most characteristic difference that discriminates the surface finishing device as shown in Fig. 5 from that as shown in Fig.1 consists in that the device as shown in Fig.5 has, on the downstream side of the electron beam gun 7, a deflection lens 12 for deflecting the electron beam BM to shift the portion to be irradiated, in addition to the focusing lens 8, and in that a focusing and deflecting control device 13 is connected to the focusing lens 8 and the deflection lens 12.

Thus, the surface finishing device as shown in Fig.5 is capable of deflecting the electron beam EB emitted from the electron beam gun 7 to freely change the portions to be irradiated, so that the surface finishing of a plurality of portions can be conducted simultaneously.

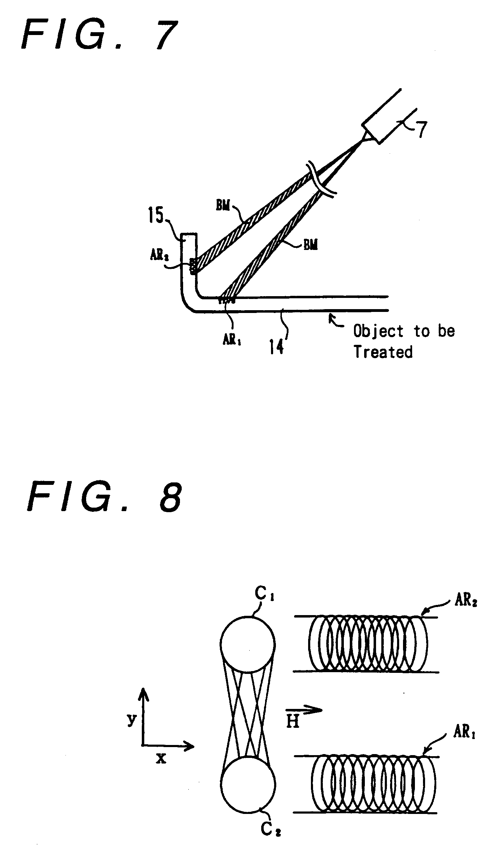

Fig.6 illustrates two surface-finished areas on the circular-tray-shaped workpiece, in which both treated areas AR1 and AR2 respectively located in a flat-plate portion 14 and a rising portion 15 cover the entire circumference of the circular-tray-shaped workpiece to be treated. The two areas can be treated simultaneously by deflecting the electron beam BM as shown in Fig.7.

More specifically, Fig.7 illustrates conditions under which irradiation with the electron bean is carried out in treating the above two areas simultaneously. In this case, the electron beam BM emitted from the aforementioned electron beam gun 7 is deflected by a deflection lens (not shown) to alternately irradiate the areas AR1 and AR2. In this manner, the areas AR1 and AR2 can be treated simultaneously for surface finishing.

Fig.8 shows an example of the locus of the electron beam BM emitted for irradiation. In the example as shown in Fig.8, the electron beam EB is emitted for irradiation in accordance with two circular deflection loci C1 and C2. In this case, the electron beam is emitted to irradiate the areas AR1 and AR2 in accordance with the circular deflection loci C1 and C2 respectively. During the irradiation, the circular-tray-shaped workpiece is caused to rotate about the central axis thereof. Thus, the locus of the electron beam BM onto the areas AR1 and AR2 to be treated moves in the direction of arrow H.

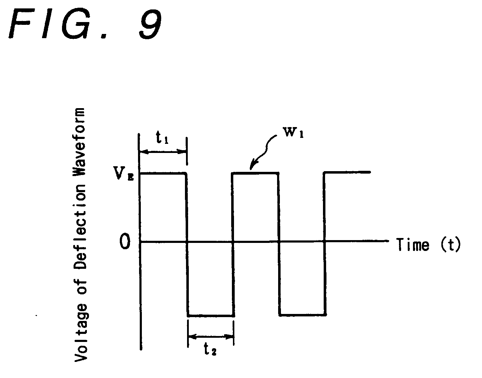

Each of the circular deflection loci C1 and C2 generates a sinusodial deflection waveform in both x- and y-axis directions and formed by combining the deflections. Moreover, in order to alternately irradiate the areas AR1 and AR2 to be treated with the electron beam BM, the deflection waveform w1 is generated as shown in Fig.9, and the deflection waveform w1 is superposed on the deflection waveform in the direction of the y-axis.

Thus, the area AR1 to be thermally treated is irradiated with the electron beam BM during a period t1 over which voltage VE is positive, whereas the area AR2 to be thermally treated is irradiated with the electron beam BM during a period t2 over which the voltage VE is negative.

In this case, as described above, since 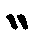 the transmitted heat does not cause the temperature of the workpiece to rise over a wide range thereof*"*, there is no thermal interference between the areas AR1 and AR2. Therefore, portions not to be irradiated are prevented from being melted unexpectedly.

Furthermore, because a plurality of areas such as the AR1 and AR2 can be treated simultaneously, the time required for the treatment can also be reduced.

The method according to the present invention is applicable to any metallic member whose surface layer needs smoothing entirely or partially, such as lock-up clutch piston of a torque converter, oil pump plate, and so forth, regardless of its composition, shape, or dimension.

## Claims

1. A surface finishing method for a metallic member wherein a high-density energy beam is emitted to irradiate a surface of the metallic member to be treated so that only the irradiated surface layer is melted, and the melted portion is resolidified subsequently.

2. A surface finishing method for a metallic member according to claim 1, wherein the melted portion comprises a fully melted layer and an incompletely melted layer adjacent thereto.

3. A surface finishing method for a metallic member according to claim 1 or claim 2, wherein the energy beam is divided to irradiate a plurality of portions on the surface layer to be treated so that said plurality of the portions can be melted simultaneously.

4. A surface finishing method for a metallic member according to one of claims 1 to 3, wherein the melted portion or portions are resolidified by natural cooling.

5. A surface-finished metallic member having a smoothed portion, only the surface layer of which is melted and resolidified.

6. A surface-finished metallic member according to claim 5 designed so that the melted and resolidified surface layer is used as an abrasion resistant surface.
